# EUROPEAN PATENT SPECIFICATION

(11) **EP 0 913 325 B1**
(45) Date of publication and mention of the grant of the patent: **09.06.2004**
(21) Application number: 97203359.1
(22) Date of filing: 30.10.1997
(51) Int. Cl.: B64D 11/00, B64C 1/00

(54) **Passenger aircraft**
Passagierflugzeug
Avion de passagers

(43) Date of publication of application: 06.05.1999
(73) Proprietor: Constantopoulos, Ioannis Vassilios, 1000 Bruxelles (BE)
(72) Inventor: Constantopoulos, Ioannis Vassilios, 1000 Bruxelles (BE)
(74) Representative: Quintelier, Claude

(56) References cited:
- EP-A- 0 653 887
- DE-A- 4 242 331
- FR-A- 2 652 701
- US-A- 4 041 529
- US-A- 5 351 898
- PATENT ABSTRACTS OF JAPAN vol. 17, no. 370 (M-1444), 13 July 1993 & JP 05 058287 A (HIRAOKA KAZUHITO), 9 March 1993,

## Description

The present invention relates to a passenger aircraft comprising a fuselage with a cockpit portion and a passenger cabin portion, as defined in the preamble of claim 1 and which is known from FR-A-2 652 701.

It is commonly known to provide a passenger aircraft with windows in order to provide an outside view to the passengers. The windows are typically formed by providing openings in the fuselage and insulation layer and fixing transparent panels.

The fuselage of an aircraft is continuously under stress (tension, torsion and bending), as a consequence i.a. of internal cabin pressure, support of the fuselage by the wings (and, secondarily the tail plane) along a limited area of the fuselage and temperature variations.

A problem with the known fuselages is that the openings cut in the fuselage form discontinuities and thus stress concentrations. In order to resist to these stress concentrations, the structure around the openings must be locally strengthened, which renders manufacturing of the fuselage cumbersome. In order to reduce the stress concentrations, a rounded geometry for the openings is preferable, for example rounded corners. The dimensions of the window openings are further limited, since between two adjacent openings, a sufficient space must be provided for providing enough strength to the fuselage. The particular geometry and limited dimensions limit however the visibility for the passenger. Particular materials for the transparent panels must further be chosen, since the windows must resist for example to the internal cabin pressure, the outside temperature and deformations imposed at their boundaries. All these requirements, i.e. local strengthening, strength requirements for transparent panels and insulation requirements between openings and panels render the manufacturing of fuselages cumbersome. Despite the insulation provided in the fuselage openings, condensation still appears on the panels, reducing considerably the passenger's visibility.

The object of the present invention is to provide an aircraft, the fuselage of which is more easy to manufacture.

A passenger aircraft in accordance with the present invention is defined in claim 1.

By providing an essentially opening-free portion in the fuselage, the number of openings are substantially reduced comparing to known passenger aircrafts. Consequently, the stress concentration is also reduced which renders the manufacturing more easy, since local strengthening is now limited to the remaining openings. By reducing the local strengthening, the aircraft is even lighter. In order to still provide an outside view to the passengers and/or pilots, there is provided, according to the invention, at least one display device displaying images formed by a camera forming images of the outside environment. At least a part of the windows known from the prior art are thus substituted by display devices displaying images formed by at least one camera, providing the passengers and/or pilots a real time display of the environment. Furthermore, condensation problems are eliminated in the passenger cabin portion by the substitution of the windows with the display device according to the invention.

Preferably, all the windows are substituted by at least one display device displaying the outside view, since this considerably facilitates the manufacturing of the aircraft, i.e. local strengthening is not required any more in the passenger cabin portion. Moreover, the insulation is now continuous which reduces heat losses.

It should be noted that essentially opening-free fuselages are known as such, for example for manufacturing military aircrafts or aircrafts for transporting goods. These aircrafts however are not provided for carrying passengers.

In a first preferred embodiment of the aircraft according to the invention, said cockpit portion is window-free, said display devices are provided in the cockpit of the aircraft and said cameras are provided for forming an image field required for navigation purposes. This enables to solve an additional problem of manufacturing the cockpit, in particular the geometry of the nose of the aircraft. The fuselage cockpit is more stressed than the lateral sides of the plane, since it is subjected to i.a. front pressure, rain and hail loading and collision with birds. A complex geometry of multiple curvature surfaces is formed in the nose for providing a satisfactory visibility to the pilots. Besides the difficulty to build such a complex geometry, the formed nose does not form an optimal aerodynamic structure. For supersonic aircrafts, the problems are further accentuated, in such a manner that for manufacturing the Concorde, a complex retracting nose must be provided in order to resist to the additional stress at high speeds, on the one hand, and provide sufficient visibility for take-off, approach, and landing at lower speeds, on the other hand. By substituting the hitherto used windows in the fuselage cockpit by virtual windows, i. e. display devices, displaying images formed by a camera, wherein the formed image fields are image fields required for navigation purposes (front view and optionally side views), the above mentioned difficulties encountered for manufacturing the fuselage cockpit are solved, while providing a satisfactory view to the pilots. It is moreover possible to provide additional views to the pilot, e.g. views of the wings. In particular, the external geometry of the nose can now be designed purely on aerodynamic and structural considerations.

In a second preferred embodiment, the aircraft according to the invention comprises a plurality of cameras, each camera being provided for forming different image fields, each of said image fields being provided to be displayed on at least one of said display devices. This enables to provide for each display device or series of display devices different image fields, e.g. a front outside view for the pilots, a left outside view for passengers on the left side of the aircraft and a right outside view for passengers on the right side of the aircraft. Preferably, each of said display devices are connected to selecting means, said selecting means being provided for selecting one of said images formed by one of said cameras. This enables to select several views in a same display device, e.g. passengers on the left side of the aircraft could select between a left outside view, a right outside view and a front view.

In a third preferred embodiment of the aircraft according to the invention, said display devices are provided laterally to a passenger's seat. This embodiment enables to provide a passenger aircraft having a same configuration as a passenger aircraft according to the prior art, whereby, at the place where windows are provided according to the prior art, a display device according to the invention is provided.

In a fourth preferred embodiment of the aircraft according to the invention, each of said display devices are provided in front of a passenger's seat. This provides a more convenient location for the passengers and leaves room on the lateral sides of the aircraft (where the windows are located in the prior art passengers aircrafts) for other features, e. g. a box for receiving small objects.

The invention will now be described further in detail referring to the annexed figures, wherein :
Figure 1 illustrates a portion of a passenger aircraft fuselage with a display device according to the invention mounted with a vertical swivel axis at the centre on the fuselage;
Figure 2 illustrates a portion of a passenger aircraft fuselage with a display device according to the invention mounted with a vertical swivel axis off the centre on the fuselage;
Figure 3 illustrates a portion of a passenger aircraft fuselage with a display device according to the invention mounted with a horizontal swivel axis on the fuselage;
Figure 4 illustrates a portion of a passenger aircraft fuselage with a series of display devices according to the invention extending over the entire length of the fuselage;
Figure 5 illustrates an aircraft according to the invention with locations for a series of cameras;
Figure 6 illustrates an aircraft according to the invention with locations for cameras on top of the fuselage; and
Figure 7 is a cross section according to line VII-VII in Figure 6.

In a passenger aircraft, it is commonly known to provide windows in order to give an outside view to the passengers. As described in the introduction, the provision of windows complicates manufacturing of the fuselage, since openings must be provided in the fuselage and insulation and local strengthening near the windows openings must be provided. Fundamentally, the invention consists in substituting at least one of the windows by "virtual windows", i.e. a display device which is connected to a camera provided for forming images of the outside environment of the aircraft. The annexed figures illustrate some possible embodiments of the aircraft according to the invention. The result is that local strengthening may be reduced to the locations where windows are still provided.

This concept may be achieved in the passenger cabin portion of the aircraft, but also in the cockpit of the aircraft. It is also conceivable to provide "virtual windows" both in the cockpit and the passengers cabin portion of the aircraft. It will be clear however that at least a front view of the environment must be provided to the display device(s) provided in the cockpit.

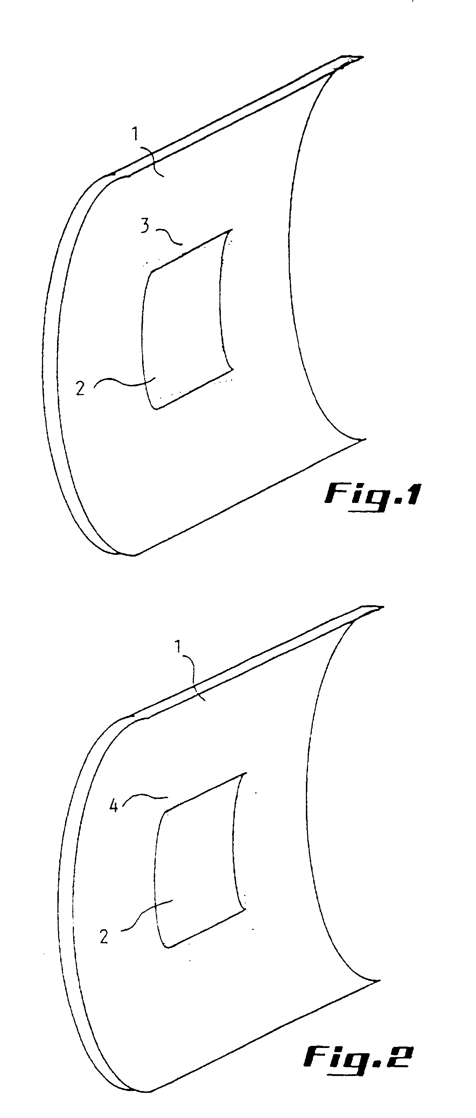

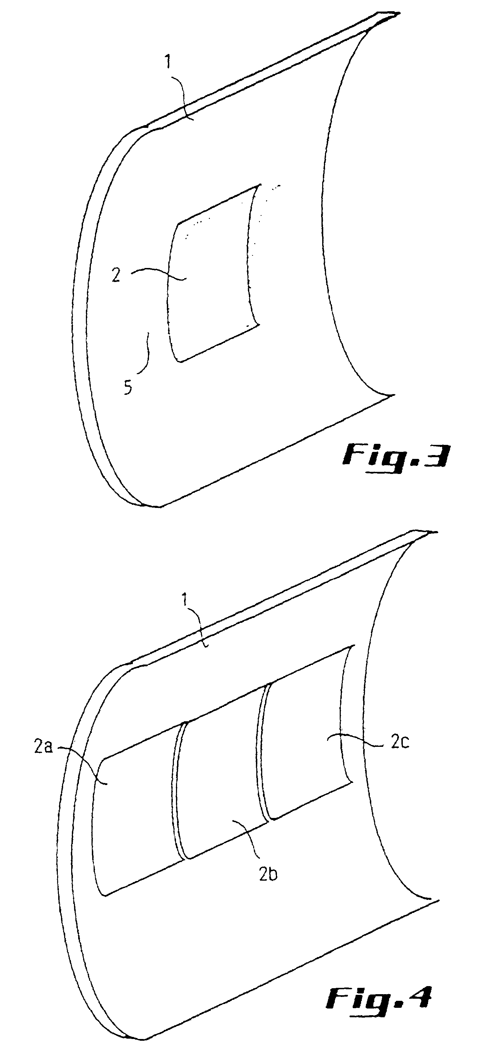

Figures 1 to 3 illustrate a portion of a passenger aircraft fuselage 1, having a display device 2 at a location, corresponding to the location in an aircraft according to the prior art where a window is provided. The display device 2 is pivotally mounted to the fuselage, so that a user (a passenger) may pivot the display device in order to obtain a better view. To this purpose a swivel axis is provided vertically at the centre, such as illustrated by 3 in Figure 1, vertically of the centre, such as illustrated by 4 in Figure 2 or horizontally, such as illustrated by 5 in Figure 3. It is also conceivable to provide a combination of vertical and horizontal swivel axes.

In a preferred embodiment according to the invention illustrated in Figure 4, display devices 2a, 2b, 2c are provided adjacent to each other in order to form a continuous strip. This provides a more complete outside view of the aircraft environment.

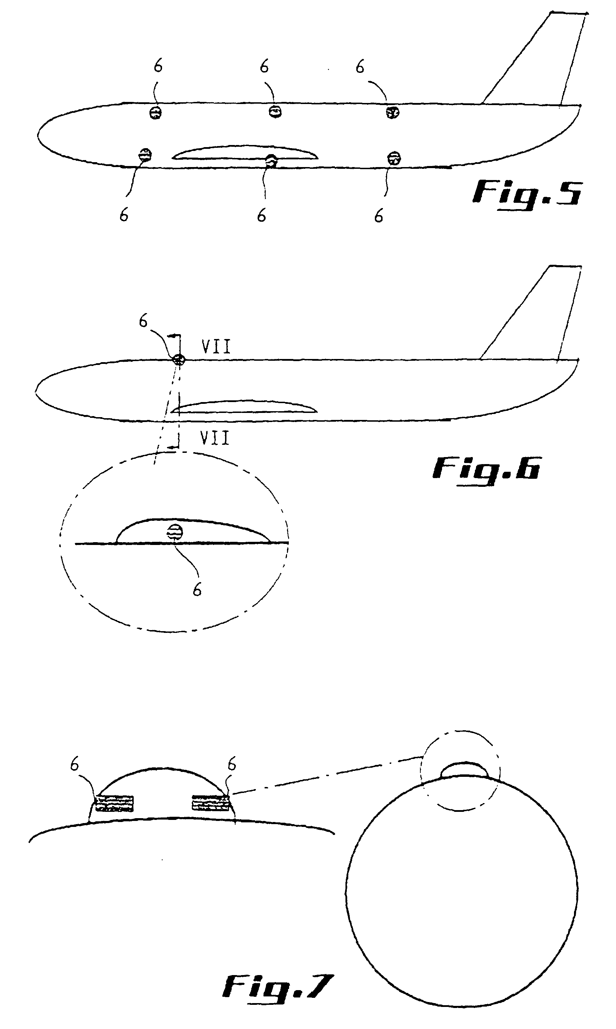

Figure 5 illustrates possible locations for cameras 6 on the outside of the fuselage, provided for forming images of the lateral outside environment above respectively under the aircraft.

Figure 6 illustrates a location for cameras on top of the aircraft and Figure 7 illustrates a cross section through lines VII-VII in Figure 6. The cameras are installed at locations in a fashion similar to navigation lights.

Preferably, the display devices are connected to selecting means which are provided for selecting one of the images formed by one of the cameras. In this way it is possible for a passenger located on the left side of the aircraft, not only to have an outside view of the left side, but also of the rights side for example.

In the annexed figures, the display devices 2 are each time provided on the fuselage, thus laterally to the passenger's seat. According to an alternative, the display devices are provided in front of the passenger's seat, a technique which is used for video screens in an aircraft.

The display devices may, besides providing images formed by the cameras 6 further be provided for displaying recorded images, for example movies, or from a television program.

The display devices are preferably LCD's or TFT's (Thin Film Transistor) or plasma or the like, so as to provide a flat screen.

The cameras are preferably small, for example CCD cameras.

The term passenger aircrafts comprise small aircrafts (known as "executive aircrafts") and also larger commercial aircrafts for transporting passengers.

It is conceivable to provide for the passengers recording possibilities of the images formed by the cameras, for example by providing a connector at the passenger seat for connecting a recording device, e.g. a video camera.

It is also conceivable to display some of the control functions of the aircraft on the display devices in the cockpit of the aircraft.

## Claims

1. A passenger aircraft comprising a fuselage with a cockpit portion and a passenger cabin portion, comprising at least one camera, provided for forming images from the outside environment of said aircraft, and at least one display device mounted at least in said passenger cabin portion and provided for displaying said images formed by said camera, **characterised in that** at least said passenger cabin portion is essentially window-free.

2. The aircraft according to claim 1, wherein said cockpit portion is window-free, said display devices are provided in the cockpit of the aircraft and said cameras are provided for forming an image field required for navigation purposes.

3. The aircraft according to any one of the preceding claims, comprising a plurality of cameras, each camera being provided for forming different image fields, each of said image fields being provided to be displayed on at least one of said display devices.

4. The aircraft according to claim 3, wherein each of said display devices are connected to selecting means, said selecting means being provided for selecting one of said images formed by one of said cameras.

5. The aircraft according to any one of the preceding claims, wherein said display devices are provided laterally to a passenger's seat.

6. The aircraft according to any one of the preceding claims, wherein each of said display devices are provided in front of a passenger's seat.

7. The aircraft according to any one of the preceding claims, wherein said display devices are each time located adjacent each other over the length of longitudinal sides of said fuselage.

8. The aircraft according to any one of the preceding claims, wherein said display devices are further provided for displaying images coming from another source than said cameras, in particular from a satellite television network or a recording apparatus.

9. The aircraft according to any one of the preceding claims, wherein said display devices are pivotally mounted in said fuselage.

## Patentansprüche

1. Passagierflugzeug, umfassend einen Rumpf mit einem Cockpit-Abschnitt und einem Passagierkabinenabschnitt, der wenigstens eine Kamera, die zum Aufnehmen von Bildern von der äußeren Umgebung des Flugzeuges bereitgestellt ist, und wenigstens eine Bildschirmvorrichtung umfasst, die zumindest im Passagierkabinenabschnitt angebracht und zum Darstellen der Bilder, die durch die Kamera aufgenommen werden, bereitgestellt ist, **dadurch gekennzeichnet, dass** zumindest der Passagierkabinenabschnitt im Wesentlichen fensterlos ist.

2. Flugzeug nach Anspruch 1, wobei der Cockpit-Abschnitt fensterlos ist, wobei die Bildschirmvorrichtungen im Cockpit des Flugzeuges bereitgestellt sind und wobei die Kameras zum Aufnehmen eines Bildfeldes, das für Navigationszwecke erforderlich ist, bereitgestellt sind.

3. Flugzeug nach jedem der vorangehenden Ansprüche, umfassend eine Mehrzahl von Kameras, wobei jede Kamera zum Aufnehmen eines unterschiedlichen Bildfeldes bereitgestellt ist, wobei jedes der Bildfelder zur Darstellung auf wenigstens einer der Bildschirmvorrichtungen vorgesehen ist.

4. Flugzeug nach Anspruch 3, wobei jede der Bildschirmvorrichtungen mit einem Auswahlmittel verbunden ist, wobei das Auswahlmittel zum Auswählen einer der Bildfolgen, die durch eine der Kameras aufgenommen wird, vorgesehen ist.

5. Flugzeug nach jedem der vorangehenden Ansprüche, wobei die Bildschirmvorrichtungen seitlich zu einem Passagiersitz bereitgestellt werden.

6. Flugzeug nach jedem der vorangehenden Ansprüche, wobei je eine der Bildschirmvorrichtungen vor einem Passagiersitz vorgesehen ist.

7. Flugzeug nach jedem der vorangehenden Ansprüche, wobei die Bildschirmvorrichtungen jeweils benachbart zu einander über die Länge der Längsseiten des Rumpfes angeordnet sind.

8. Flugzeug nach jedem der vorangehenden Ansprüche, wobei die Bildschirmvorrichtungen des Weiteren zum Darstellen von Bildern bereitgestellt sind, die von einer anderen Quelle als den Kameras stammen, insbesondere von Satellitenfernsehnetzen oder von einem Aufzeichnungsgerät.

9. Flugzeug nach jedem der vorangehenden Ansprüche, wobei die Bildschirmvorrichtungen drehbar im Flugzeugrumpf angebracht sind.

## Revendications

1. Avion pour passager comprenant un fuselage avec une partie cockpit et une partie cabine pour passager, comprenant au moins une caméra, prévue pour former des images provenant de l'environnement extérieur dudit avion, et au moins un dispositif d'affichage monté dans au moins la partie de cabine pour passager et prévu pour afficher lesdites images formées par ladite caméra, **caractérisé en ce qu'**au moins une partie de ladite cabine pour passager est essentiellement dépourvue de hublot.

2. Avion suivant la revendication 1, dans lequel ladite partie de cockpit est dépourvue de hublot, lesdits dispositifs d'affichage étant prévus dans le cockpit de l'avion et lesdites caméras étant prévues pour former un champ d'image requis à des fins de navigation.

3. Avion suivant l'une quelconque des revendications précédentes, comprenant plusieurs caméras, chaque caméra étant prévue pour former différents champs d'image, chacun desdits champs d'image étant prévu pour être affiché sur au moins un desdits dispositifs d'affichage.

4. Avion suivant la revendication 3, dans lequel chacun des dispositifs d'affichage est connecté à des moyens de sélection, lesdits moyens de sélection étant prévus pour sélectionner une desdites images formées par une desdites caméras.

5. Avion suivant l'une quelconque des revendications précédentes, dans lequel les dispositifs d'affichage sont prévus latéralement par rapport à un siège de passager.

6. Avion suivant l'une quelconque des revendications précédentes, dans lequel chacun desdits dispositifs d'affichage est prévu devant un siège de passager.

7. Avion suivant l'une quelconque des revendications précédentes, dans lequel les dispositifs d'affichage sont chaque fois localisés de façon adjacente l'un par rapport à l'autre le long des côtés longitudinaux dudit fuselage.

8. Avion suivant l'une quelconque des revendications précédentes, dans lequel lesdits dispositifs d'affichage sont de plus prévus pour afficher des images provenant d'une autre source que desdites caméras, en particulier à partir d'un réseau de télévision par satellite ou d'un appareil d'enregistrement.

9. Avion suivant l'une quelconque des revendications précédentes, dans lequel lesdits dispositifs d'affichage sont montés de façon pivotante dans ledit fuselage.
